# EUROPÄISCHE PATENTSCHRIFT

(11) **EP 2 058 551 B1**
(45) Veröffentlichungstag und Bekanntmachung des Hinweises auf die Patenterteilung: **29.12.2010**
(21) Anmeldenummer: 08018934.3
(22) Anmeldetag: 30.10.2008
(51) Int. Cl.: F16F 13/14

(54) **Elastische Lagerbuchse mit hydraulischer Dämpfung**
Elastic bearing sleeve with hydraulic dampening
Coussinet élastique avec amortissement hydraulique

(30) Priorität: 08.11.2007 DE 102007053112
(43) Veröffentlichungstag der Anmeldung: 13.05.2009
(73) Patentinhaber: Jörn GmbH, 71336 Waiblingen (DE)
(72) Erfinder: Zawadzki, Bernd, 71409 Schwaikheim (DE); Seck, Gerhard, 73630 Remshalden (DE); Sprang, Rüdiger, 53125 Bonn (DE)
(74) Vertreter: Liebl, Thomas

(56) Entgegenhaltungen:
- EP-A- 1 701 057
- US-A- 5 286 011

## Beschreibung

Die Erfindung betrifft eine elastische Lagerbuchse mit hydraulischer Dämpfung insbesondere für Lagerungen in einem Kraftfahrzeug oder als Maschinenlagerung nach dem Oberbegriff des Anspruchs 1.

Bekannte elastische Lagerbuchsen mit hydraulischer Dämpfung (DE 36 17 787 C2; DE 36 31 620 A1) bestehen aus einem Innenteil zur Verbindung mit einem ersten zu lagernden Bauteil und einem Außenrohr sowie aus einem Elastomerkörper zwischen dem Innenteil und dem Außenrohr. Zudem weisen solche Lagerbuchsen zwei radial gegenüberliegende, mit hydraulischer Flüssigkeit gefüllte Arbeitskammern auf, die durch zugeordnete Aussparungen im Außenrohr und im Elastomerkörper sowie durch eine flüssigkeitsdicht abschließende Außenhülse gebildet sind. Die zwei Arbeitskammern sind durch einen Strömungskanal miteinander verbunden.

Bei einer solchen elastischen Lagerbuchse mit hydraulischer Dämpfung wird bei radialer oszilierender Ein- und Ausfederung eine Änderung des Volumens mit einer Änderung des Drucks in den Arbeitskammern erzeugt, die von der Einfederung und der Beulfähigkeit oder sogenannten Volumensteifigkeit der Kammerbegrenzungen abhängig ist. Durch eine solche Volumenänderung wird Flüssigkeit von der einen Arbeitskammer durch den Strömungskanal in die andere Arbeitskammer und zurück verdrängt. Das gewünschte Dämpfungsoder Tilgungsverhalten ergibt sich durch die Eigenschwingung der Flüssigkeitsmasse im Strömungskanal, welche gegen die Volumensteifigkeit schwingt. Das Dämpfungsverhalten ist dabei abhängig von Eintritts-, Umlenkund Reibungsverlusten im Strömungskanal. Erzielbar sind mechanische Verlustwinkel bis zu 60°, je nach Amplitude im Frequenzbereich von im allgemeinen größer/gleich 5 Hz. Hohe Verlustwinkel bei gewünscht niedrigen Frequenzen sind bauartbedingt regelmäßig dann erreichbar, wenn die schwingende Flüssigkeitsmasse im Strömungskanal möglichst groß ist.

Bei den bekannten Lagern wird dies durch eine lange, zum Teil mehrfach umlaufende Strömungskanalführung an der Buchsenmantelfläche erreicht. Diese Kanalführung erfolgt in zusätzlichen Bauteilen wie Kanalträgern oder Einsätzen. Dies führt zu einem komplexen Lageraufbau mit relativ hohen Herstellkosten.

Weiter ist aus der gattungsbildenden EP 1 701 057 A1 eine elastische Lagerbuchse mit hydraulischer Dämpfung bekannt, bei der ein Innenteil und ein rohrförmiges Außenteil vorgesehen sind, zwischen denen ein Elastomerteil angeordnet ist. In dem Elastomerteil ist diametral gegenüberliegend eine Arbeitskammer und eine Expansionskammer ausgebildet, die mittels eines Verbindungskanals miteinander verbunden sind, wobei der Verbindungskanal in Lagerlängsrichtung gesehen einen S-förmigen Zwischenbereich aufweist, der einen ersten radial äußeren Kanalbereich mit einem gegenüberliegenden radial äußeren Kanalbereich verbindet. Über diesen nutförmigen Verbindungskanal kann das Arbeitsmedium zwischen der Arbeitskammer und der Ausdehnungskammer hin- und herströmen.

Aufgabe der Erfindung ist es demgegenüber, eine gattungsgemäße elastische Lagerbuchse mit hydraulischer Dämpfung so weiterzubilden, dass sie bei einfachem Aufbau und großem Flüssigkeitsvolumen in den Arbeitskammern und im Strömungskanal eine gute Funktion aufweist.

Diese Aufgabe wird mit den Merkmalen des Anspruchs 1 gelöst.

Gemäß Anspruch 1 ist der Strömungskanal im Bereich der Aussparungen durch Trennwände von den zugeordneten Arbeitskammern abgeteilt und die Trennwände sind entlang der Aussparungen durch kragenförmige Durchstellungen des Außenrohrs als in Elastomermaterial eingebettete Kragenteile gebildet. Erfindungsgemäß ist auf dem Außenrohr radial außen eine Elastomerschicht aufgebracht, in der in Teilbereichen der Strömungskanal mit seinem Kanalboden und den Kanalseitenwänden sowie eine Übergangskonturkammer eingeformt sind, wobei der Strömungskanal und die Übergangskonturkammer radial außen von der Außenhülse flüssigkeitsdicht begrenzt sind.

Dabei besteht der Strömungskanal aus zwei Kanalteilen, von denen jeweils ein Kanalteil seitlich neben den Arbeitskammern in einer Querebene verläuft dergestalt, dass der erste Teilkanal mit der ersten Arbeitskammer über eine erste seitliche Kammerausgangsöffnung verbunden ist, neben der ersten Arbeitskammer und der zweiten Arbeitskammer in Umfangsrichtung vorbeiläuft und in die Übergangskonturkammer einmündet. Entsprechend ist der zweite Teilkanal mit der zweiten Arbeitskammer über eine zweite seitliche Kammerausgangsöffnung verbunden und läuft neben der zweiten Arbeitskammer und der ersten Arbeitskammer jeweils durch Trennwände abgetrennt in der entgegengesetzten Umfangsrichtung vorbei, wonach er ebenfalls in die Übergangskonturkammer einmündet. Über diese Übergangskonturkammer ist die Strömungsverbindung der axial gegenüberliegenden Teilkanäle hergestellt.

Das Außenrohr ist dabei als Käfigteil ausgebildet ist, mit jeweils einem stirnseitig umlaufend geschlossenen Stützringteil und mit zwei radial gegenüberliegenden, die Stützringteile axial verbindenden Rohrstegteilen, wobei zwischen den Rohrstegteilen die Aussparungen für die Arbeitskammern mit den Kragenteilen gebildet sind, und auf den Rohrstegteilen jeweils Elastomerkörper angeordnet sind.

Die Lage und Anordnung der beiden Teilkanäle sind so gewählt, dass die axial äußeren Kanalseitenwände der Teilkanäle jeweils durch eine radial nach innen gerichtete, umlaufende Kanalseitenwandstufe eines zugeordneten Stützringteils des Außenrohrs gebildet sind.

Die Kanalböden der Teilkanäle sind jeweils einerseits durch einen axial an eine zugeordnete Kanalseitenwandstufe angrenzenden Rohrstegteilbereich und andererseits zwischen den Rohrstegteilen durch einen an die Kanalseitenwandstufe angrenzenden Ringbundabschnitt des Außenrohrs gebildet, wobei die axial inneren Kanalseitenwände der Teilkanäle einerseits im Bereich eines Rohrstegteils durch einen Elastomerkörperrandbereich und andererseits zwischen den Rohrstegteilen als Trennwände zu der jeweils angrenzenden Arbeitskammer durch ein nach radial außen am zugeordneten Ringbundabschnitt durchgestelltes stabiles Kragenteil als Kragenringabschnitt des Außenrohrs gebildet sind. Ein derartiger Aufbau ist besonders einfach und kostengünstig herzustellen, wobei - um die schwingfähige Flüssigkeitsmasse im Strömungskanal möglichst groß zu halten - zusätzlich zu einer großen Länge des Strömungskanals ein möglichst großer optimierter Querschnitt des Strömungskanals bei möglichst großem Volumen der Arbeitskammern wesentlich ist. Aufgrund des vorgegebenen, begrenzten Bauraums der Lagerbuchse ist es daher erforderlich die Trennwände zwischen den Arbeitskammern und dem Strömungskanal beziehungsweise zu Teilkanälen stegartig möglichst dünn zu gestalten. Bei einer Ausführung solcher dünner Trennwände zum Beispiel als Elastomerstege geben diese bei den oszillierenden Druckänderungen in den Arbeitskammern nach, wodurch der Querschnitt des Strömungskanals beziehungsweise von Teilkanälen unkontrolliert zeitabhängig verändert wird, was einen negativen Einfluss auf die Funktion der hydraulischen Dämpfung hat. Zur Vermeidung eines solchen Nachteils werden diese Trennwände bei dünner Wandstärke durch die durchgestellten stabilen Kragenteile formstabil versteift und so ein gleichbleibend formstabiler großer Strömungskanalabschnitt sichergestellt.

Zudem sind in einer bevorzugten Weiterbildung nach Anspruch 2 die Stützringteile radial außen und im Bereich der Kanalseitenwandstufen sowie die Ringbundabschnitte und Kragenringabschnitte mit Elastomermaterial überzogen und/oder darin eingebettet.

Diese elastische Lagerbuchse enthält einen gewünscht langen und querschnitthaltigen Strömungskanal.
Zudem ist diese elastische Lagerbuchse einfach aufgebaut, sowie einfach und kostengünstig zu fertigen, da keine zusätzlichen aufwendigen Bauteile, wie zum Beispiel Kanalträger erforderlich sind. Das Lagerteil bestehend aus dem Innenteil, dem Außenrohr und dem Elastomermaterial kann so gestaltet werden, dass es bei der Fertigung einfach in vertikaler Richtung aus einer horizontal geteilten Form zu entformen ist, da beim Strömungskanalverlauf keine Hinterschneidungen vorliegen und auch Strömungsführungskonturen in der Übergangskonturkammer einfach entformbar gestaltet werden können, wobei zusätzlich eine die Strömung günstig beeinflussende Geometrie einformbar ist.

Vorteilhaft wird nach Anspruch 3 das Außenrohr als einteiliges materialeinheitliches Käfigrohrteil hergestellt, wobei je nach den Gegebenheiten die Herstellung als bearbeitetes Blechrohrteil oder als aus Kunststoff oder Metallmaterial gegossenes Käfigrohrteil zweckmäßig ist.

Gemäß einer vorteilhaften Weiterbildung nach Anspruch 4 hat die Übergangskonturkammer einen größeren Querschnitt als die Teilkanäle, so dass die Übergangskonturkammer gegenüber den Teilkanälen eine Erweiterung darstellt. Dadurch wird vorteilhaft die schwingende Flüssigkeitsmasse zur Erzielung eines geeigneten Dämpfungsverhaltens weiter vergrößert. Zudem kann in der Übergangskonturkammer eine Strömungsführungskontur zwischen den einmündenden Teilkanälen ausgebildet werden, mit der die Strömung der Flüssigkeit im Sinne eines geeigneten Dämpfungsverhaltens positiv beeinflussbar ist.

Für eine einfache Entformung bei der Herstellung ist es zweckmäßig, die Übergangskonturkammer zumindest teilweise als Zylinderabschnitt auszubilden, wobei die Abschnittfläche in der Entformrichtung liegt.

Vorteilhaft kann nach Anspruch 5 die obere Begrenzung (bezogen auf die nachstehend genannte Einbaulage) der Stromführungskontur in der Übergangskonturkammer einen strömungsoptimierten Kurvenverlauf zwischen der Einmündung des ersten Teilkanals und des zweiten Teilkanals aufweisen. Dabei ist die Entformbarkeit gewährleistet.

Mit der Maßnahme nach Anspruch 6 kann ein Elastomerkörper eine Vorspannung ohne unerwünschte Verformungen an der Außenhülse, insbesondere an deren kreisförmigen Stützringteilen, aufgebracht werden.

Bei einem bevorzugten Einbau nach Anspruch 7, beispielsweise als Aggregatlager oder Fahrerhauslager, wird die Lagerbuchse in ein Aufnahmeauge des zweiten zu lagernden Bauteils, beispielsweise eines Fahrerhauses eines Lkw, mit etwa horizontaler Buchsenachse und vertikal übereinanderliegenden Arbeitskammern eingepresst. Eine so eingebaute Lagerbuchse ist dann für eine gedämpfte elastische Abstützung vertikaler Belastungen geeignet.

In einer weiteren Ausgestaltung nach Anspruch 8 sind am Innenteil mit Elastomermaterial überzogene Anschläge angeformt, die radial in die Arbeitskammern unter Berücksichtigung eines freien Federwegs einragen. Bei starken Ein- oder Ausfederungen kommen diese Anschläge an der Innenseite der Außenhülse zur Anlage und stützen sich darüber im Aufnahmeauge ab. Zudem ist für eine gute Tragfunktion das Innenteil etwa entsprechend einem Konuslager im Querschnitt nach unten konisch verjüngt ausgebildet. Zudem ist das Innenteil aus Kunststoff mit einer zentralen Bohrung zur Aufnahme einer Schwenkachse hergestellt. Ein solches Lager ist unter anderem gut geeignet zur Abstützung des Fahrerhauses eines Lkw.

Anhand einer Zeichnung wird die Erfindung näher erläutert.

Es zeigen:
- Fig. 1: einen Querschnitt durch eine elastische Lagerbuchse mit hydraulischer Dämpfung entlang der Linie A-A aus Fig. 2,
- Fig. 2: einen Längsschnitt durch die Lagerbuchse,
- Fig. 3: eine perspektivische Ansicht der Lagerbuchse,
- Fig. 4: eine perspektivische Ansicht eines Außenrohrs als einteiliges Käfigteil.

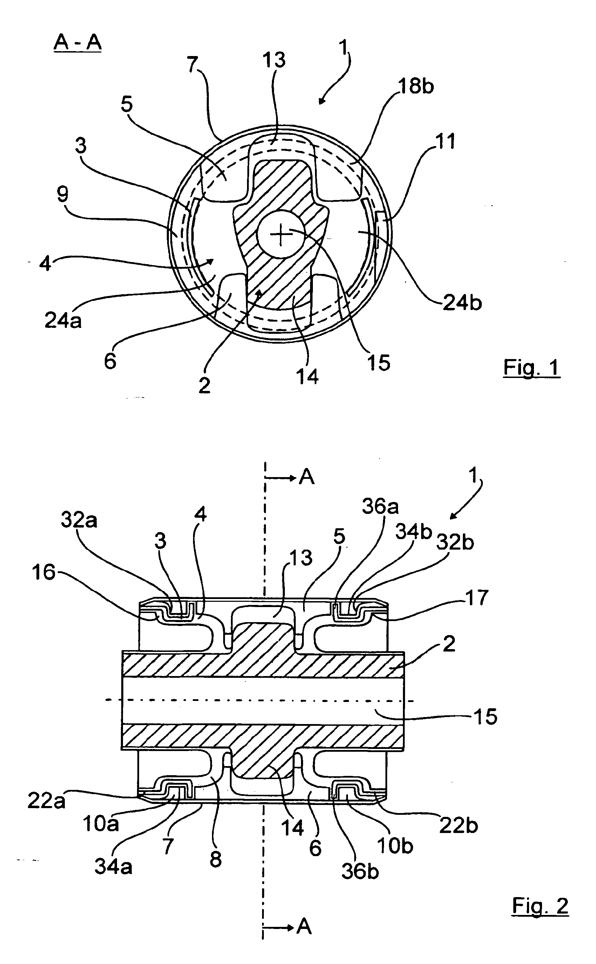

In den Fig. 1 bis 3 ist jeweils eine elastische Lagerbuchse 1 dargestellt, die aus einem Innenteil 2, einem Außenrohr 3 und einem Elastomerkörper 4 zwischen dem Innenteil 2 und dem Außenrohr 3 besteht.

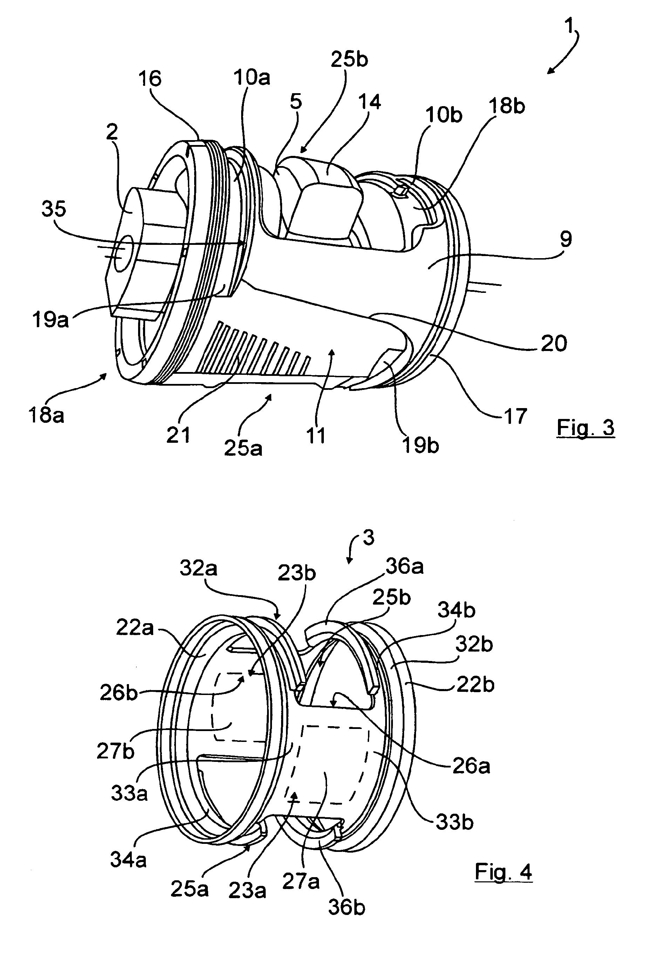

Zudem sind zwei radial gegenüberliegende, mit hydraulischer Flüssigkeit gefüllte Arbeitskammern ausgebildet (obere Arbeitskammer 5 und untere Arbeitskammer 6), die durch zugeordnete Aussparungen 25a, 25b im Außenrohr 3 sowie im Elastomerkörper 4 und durch eine flüssigkeitsdicht abschließende Außenhülse 7 hergestellt sind. Wie aus den Fig. 1 und 2 ersichtlich, sind damit die Arbeitskammern 5, 6 bezüglich des Elastomermaterials an den jeweiligen Kammerböden von den beidseitigen stark dimensionierten Elastomerblöcken und in den Seitenbereichen von zur Lagermitte eingezogenen dünnwandigeren Elastomerwänden 8 begrenzt. Bedingt durch die Ausnehmungen 25a, 25b am Außenrohr 3 im Bereich der Arbeitskammern 5, 6 sind in Fig. 1 lediglich die gegenüberliegenden Rohrstegteile 23a, 23b des Außenrohrs 3 und entsprechen in Fig. 2 nur die eingeformten umlaufenden Stützringteile 22a, 22b des Außenrohrs 3 sichtbar, die näher in Verbindung mit Fig. 4 beschrieben werden.

Auf dem Außenrohr 3 ist radial außen eine Elastomerschicht 9 aufgebracht, in der ein Strömungskanal 10 mit seinen beiden Teilkanälen 10a, 10b sowie eine Übergangskonturkammer 11 eingeformt sind, wobei die Teilkanäle 10a, 10b und die Übergangskonturkammer 11 radial außen von der Außenhülse 7 flüssigkeitsdicht begrenzt sind. Die konkrete Anordnung des Strömungskanals mit seinen Teilkanälen 10a, 10b wird weiter unten detailliert beschrieben.

Am Innenteil 2 sind in einem axial mittleren Bereich gegenüberliegende, mit Elastomermaterial 13 überzogene Anschläge 14 angeformt, die jeweils radial in die Arbeitskammern 5, 6 einragen. Das Innenteil 2 ist im Querschnitt nach unten konisch verjüngt ausgebildet. Es ist aus Kunststoff hergestellt mit einer zentralen Bohrung 15 zur Aufnahme einer metallischen Schwenkachse.

In Fig. 3 ist eine perspektivische Ansicht der elastischen Lagerbuchse 1, jedoch ohne die Außenhülse 7 gezeigt. Es sind hier deutlich das Innenteil 2, die obere Arbeitskammer 5 mit dem oberen Anschlag 14, sowie die stirnseitig umlaufenden Ringbereiche 16 und 17 mit den aus Elastomermaterial geformten Dichtlippen für die Außenhülse 7 erkennbar. Zudem ist die Elastomerschicht 9 zu ersehen, in die die Teilkanäle 10a, 10b und die Übergangskonturkammer 11 eingeformt sind.

Die Teilkanäle 10a und 10b verlaufen jeweils seitlich neben den Arbeitskammern 5 und 6. Dabei ist der Teilkanal 10b mit der oberen Arbeitskammer 5 über eine seitliche Kammerausgangsöffnung 18b verbunden. Von dort läuft der Teilkanal 10b an der oberen Arbeitskammer 5 und der unteren Arbeitskammer 6 in Umfangsrichtung vorbei und mündet an der Einmündung 19b in die Übergangskonturkammer 11.

Entsprechend beginnt der andere Teilkanal 10a an einer (in Fig. 3 nicht zu ersehenden) Kammerausgangsöffnung 18a der unteren Arbeitskammer 6 und verläuft neben der unteren Arbeitskammer 6 und der oberen Arbeitskammer 5 in der entgegengesetzten Umfangsrichtung bis zur Einmündung 19a in die Überganskonturkammer 11. In der Übergangskonturkammer 11 ist die Strömungsverbindung zwischen den Teilkanälen 10a, 10b bzw. deren Einmündungen 19a, 19b hergestellt.

Die Übergangskonturkammer 11 ist teilweise als Zylinderabschnitt ausgebildet mit einer vertikalstehenden Abschnittsfläche, wie aus Fig. 1 ersichtlich. Die obere Begrenzung 20 der Stromführungskontur hat einen strömungsoptimierten Kurvenverlauf zwischen den Einmündungen 19a und 19b, wobei zusätzlich im unteren Bereich der Übergangskonturkammer 11 unterhalb und seitlich zur Einmündung 19a vertikal ausgerichtete Längslamellen 21 angeformt, deren obere Verbindungslinie einer unteren Begrenzung der Stromführungskontur etwa parallel mitlaufend mit der oberen Begrenzung 20 entspricht.

In Fig. 4 ist das Außenrohr 3 als einteiliges Käfigteil, vorzugsweise aus Metall, gezeigt mit stirnseitig umlaufend geschlossenen Stützringteilen 22a, 22b und mit zwei radial gegenüberliegenden die Stützringteile 22a und 22b axial verbindenden Rohrstegteilen 23a, 23b. Die Stützringteile sind radial außen bei der fertig hergestellten Lagerbuchse zur Ausbildung der stirnseitigen Ringbereiche 16, 17 und der Dichtlippen mit Elastomermaterial überzogen. Die Rohrstegteile 23a, 23b sind den beiden gegenüberliegenden Elastomerblöcken 24a, 24b des Etastomerkörpers 4 zugeordnet und dort eingeformt. Zwischen den Rohrstegteilen sind die Aussparungen 25a, 25b für die Arbeitskammern 5, 6 ausgespart.

In den Rohrstegteilen 23a, 23b können jeweils Fenster 26a, 26b (strichliert eingezeichnet) angebracht sein, welche mit Druckelementen in der Art von Fensterdeckeln 27a, 27b abgedeckt sein können, die vor der Montage der Außenhülse 7 radial vorstehen und die beim Aufstecken der Außenhülse 7 unter Aufbringung einer Vorspannung im Elastomerkörper 4 nach radial innen verlagert werden.

Konkret sind die axial äußeren Kanalseitenwände der Teilkanäle 10a, 10b jeweils durch eine radial nach innen gerichtete umlaufende Kanalseitenwandstufe 32a, 32b des jeweiligen Stützringteils 22a, 22b des Außenrohrs 3 gebildet.

Die Kanalböden der Teilkanäle 10a, 10b sind jeweils einerseits durch einen axial nach innen an die Kanalseitenwandstufen 32a, 32b angrenzenden Rohrstegteilbereich 33a, 33b und andererseits zwischen den Rohrstegteilen 23a, 23b durch einen Ringbundabschnitt 34a, 34b des Außenrohrs 3 gebildet, wobei die Ausbildung jeweils an den gegenüberliegenden Teilkanälen 10a, 10b gleich ist.

Die axial inneren Kanalseitenwände der Teilkanäle 10a, 10b sind im Bereich der Rohrstegteile 23a, 23b jeweils durch einen eingeformten Elastomerkörperrandbereich 35 gebildet (siehe Fig. 3). Dagegen sind jeweils zwischen den Rohrstegteilen 23a, 23b diese Kanalseitenwände als stegförmige Trennwände zu den jeweils angrenzenden Arbeitskammern 5, 6 ausgebildet und durch radial nach außen am zugeordneten Ringbundabschnitt 34a, 34b durchgestellte stabile Kragenteile als Kragenringabschnitte 36a, 36b des Außenrohrs 3 ausgeführt, wobei auch hier die Ausbildung an den gegenüberliegenden Teilkanälen 10a, 10b gleich ist. Damit werden formstabile Teilkanäle 10a, 10b geschaffen, deren Trennwände aufgrund der stabilen Versteifung durch die Kragenringabschnitte 36a, 36b nicht aus- oder einbeulen.

Die Stützringteile 22a, 22b sind radial außen zusammen mit den Bereichen der Kanalseitenwandstufen 32a, 32b sowie die Ringbundabschnitte 34a, 34b und die Kragenringabschnitte 36a, 36b mit Elastomermaterial überzogen (Fig. 2).

## Patentansprüche

1. Elastische Lagerbuchse mit hydraulischer Dämpfung
mit einem Innenteil (2) zur Verbindung mit einem ersten zu lagernden Bauteil und einem Außenrohr (3),
mit einem Elastomerkörper (4) zwischen dem Innenteil (2) und dem Außenrohr (3),
mit zwei, radial gegenüberliegenden, mit hydraulischer Flüssigkeit gefüllten Arbeitskammern (5, 6), die durch zugeordnete Aussparungen (25a, 25b) im Außenrohr (3) und im Elastomerkörper (4) sowie durch eine flüssigkeitsdicht abschließende Außenhülse (7) gebildet sind, und
mit einem Strömungskanal (10a, 10b, 11) zur Strömungsverbindung der zwei Arbeitskammern (5, 6),
wobei der Strömungskanal (10a, 10b) im Bereich der Aussparungen (25a, 25b) durch Trennwände von den zugeordneten Arbeitskammern (5, 6) abgeteilt ist und die Trennwände entlang der Aussparungen (25a, 25b) durch kragenförmige Durchstellungen des Außenrohrs (3) als in Elastomermaterial eingebettete Kragenteile (36a, 36b) gebildet sind,
**dadurch gekennzeichnet,**
**dass** auf dem Außenrohr (3) radial außen eine Elastomerschicht (9) aufgebracht ist, in der in Teilbereichen der Strömungskanal (10a, 10b) mit seinem Kanalboden und den Kanalseitenwänden sowie eine Übergangskonturkammer (11) eingeformt sind, wobei der Strömungskanal (10a, 10b) und die Übergangskonturkammer (11) radial außen von der Außenhülse (7) flüssigkeitsdicht begrenzt sind, und
**dass** der Strömungskanal aus zwei Teilkanälen (10a, 10b) besteht, von denen jeweils ein Teilkanal (10a, 10b) seitlich neben den Arbeitskammem (5, 6) in einer Querebene verläuft, dergestalt
**dass** der erste Teilkanal (10b) mit der ersten Arbeitskammer (5) über eine erste seitliche Kammerausgangsöffnung (18b) verbunden ist, neben der ersten Arbeitskammer (5) und der zweiten Arbeitskammer (6) jeweils durch Trennwände abgetrennt in Umfangsrichtung vorbeiläuft und in die Übergangskonturkammer (11) einmündet,
**dass** der zweite Teilkanal (10a) entsprechend mit der zweiten Arbeitskammer (6) über eine zweite seitliche Kammerausgangsöffnung (19a) verbunden ist, neben der zweiten Arbeitskammer (6) und der ersten Arbeitskammer (5) jeweils durch Trennwände abgetrennt in der entgegengesetzten Umfangsrichtung vorbeiläuft und ebenfalls in die Übergangskonturkammer (11) einmündet, über die in Buchsenlängsrichtung eine Strömungsverbindung zwischen dem ersten Teilkanal (10b) und dem zweiten Teilkanal (10a) hergestellt ist,
**dass** das Außenrohr (3) als Käfigteil ausgebildet ist, mit jeweils einem stirnseitig umlaufend geschlossenen Stützringteil (22a, 22b) und mit zwei radial gegenüberliegenden, die Stützringteile (22a, 22b) axial verbindenden Rohrstegteilen (23a, 23b), wobei zwischen den Rohrstegteilen (23a, 23b) die Aussparungen (25a, 25b) für die Arbeitskammern (5, 6) gebildet sind, und an den Rohrstegteilen (23a, 23b) jeweils Elastomerkörper (4; 24a, 24b) angeordnet sind,
**dass** die axial äußeren Kanalseitenwände der Teilkanäle (10a, 10b) jeweils durch eine radial nach innen gerichtete, umlaufende Kanalseitenwandstufe (32a, 32b) eines zugeordneten Stützringteils (22a, 22b) des Außenrohrs (3) gebildet sind,
**dass** die Kanalböden der Teilkanäle (10a, 10b) jeweils einerseits durch einen axial an eine zugeordnete Kanalseitenwandstufe (32a, 32b) angrenzenden Rohrstegteilbereich (33a, 33b) und andererseits zwischen den Rohrstegteilen (23a, 23b) durch einen an die Kanalseitenwandstufe (32a, 32b) angrenzenden Ringbundabschnitt (34a, 34b) des Außenrohrs (3) gebildet sind, und
**dass** die axial inneren Kanalseitenwände der Teilkanäle (10a, 10b) einerseits im Bereich eines Rohrstegteils (23a, 23b) durch einen Elastomerkörperrandbereich (35) und andererseits zwischen den Rohrstegteilen (23a, 23b) als Trennwände zu der jeweils angrenzenden Arbeitskammer (5, 6) durch ein nach radial außen am zugeordneten Ringbundabschnitt (34a, 34b) durchgestelltes stabiles Kragenteil als Kragenringabschnitt (36a, 36b) des Außenrohrs (3) gebildet sind.

2. Elastische Lagerbuchse nach Anspruch 1, **dadurch gekennzeichnet, dass** die Stützringteile (22a, 22b) radial außen und im Bereich der Kanalseitenwandstufen (32a, 32b) sowie die Ringbundabschnitte (34a, 34b) und Kragenringabschnitte (36a, 36b) mit Elastomermaterial überzogen und/oder darin eingebettet sind.

3. Elastische Lagerbuchse nach Anspruch 1 oder 2, **dadurch gekennzeichnet, dass** das Außenrohr (3) ein einteiliges materialeinheitliches Käfigrohrteil als bearbeitetes Blechrohrteil oder als aus Kunststoff oder Metallmaterial gegossenes Gießteil ist.

4. Elastische Lagerbuchse nach einem der Ansprüche 1 bis 3, **dadurch gekennzeichnet, dass** die Übergangskonturkammer (11) einen größeren Querschnitt als die Teilkanäle (10a, 10b) aufweist und gegenüber diesen eine Erweiterung darstellt, und
dass die Übergangskonturkammer (11) eine Strömungsführungskontur (20; 21) zwischen den einmündenden Teilkanälen (10a, 10b) aufweist.

5. Elastische Lagerbuchse nach Anspruch 4, **dadurch gekennzeichnet, dass** die obere Begrenzung (20) der Stromführungskontur in der Übergangskonturkammer (11) einen strömungsoptimierten Kurvenverlauf zwischen der Einmündung (19b) des ersten Teilkanals (10b) und der Einmündung (19a) des zweiten Teilkanals (10a) aufweist.

6. Elastisches Lager nach einem der Ansprüche 1 bis 5, **dadurch gekennzeichnet, dass** in den Rohrstegteilen (23a, 23b) jeweils wenigstens ein Fenster (26a, 26b) angebracht ist, dem wenigstens ein Druckelement (27a, 27b) zugeordnet ist, welches im Fensterbereich angeordnet ist und vor der Montage der Außenhülse (7) vorsteht, so dass beim Aufstecken der Außenhülse (7) das wenigstens eine Druckelement (27a, 27b) nach radial innen unter Aufbringen einer Vorspannung im Elastomerkörper (4; 24a, 24b) verlagert wird, ohne dabei die Stützringteile (22a, 22b) und/oder Rohrstegteile (23a, 23b) unzulässig zu verformen.

7. Elastische Lagerbuchse nach einem der Ansprüche 1 bis 6, **dadurch gekennzeichnet, dass** der Einbau der Lagerbuchse (1) durch Einpressen in ein Aufnahmeauge des zweiten zu lagernden Bauteils mit etwa horizontaler Buchsenachse und vertikal übereinanderliegenden Arbeitskammern (5, 6) erfolgt.

8. Elastische Lagerbuchse nach einem der Ansprüche 1 bis 7, **dadurch gekennzeichnet, dass** am Innenteil (2) mit Elastomermaterial (13) überzogene Anschläge (14) angeformt sind, die radial in die Arbeitskammern (5, 6) einragen,
dass das Innenteil (2) im Querschnitt nach unten konisch verjüngt ausgebildet ist, und
dass das Innenteil (2) aus Kunststoff mit einer zentralen Bohrung (15) zur Aufnahme einer Schwenkachse hergestellt ist.

## Claims

1. Elastic bearing bush with hydraulic damping,
with an inner part (2) for connection to a first component to be mounted, and with an exterior sleeve (3) ,
with a elastomer body (4) between the inner part (2) and the exterior sleeve (3),
with two radially opposite working chambers (5, 6) which are filled with hydraulic fluid and are formed by associated cutouts (25a, 25b) in the exterior sleeve (3) and in the elastomer body (4) and by a exterior shell (7) which seals in a liquid-tight manner, and
with a flow passage (10a, 10b) for the flow connection of the two working chambers (5, 6),
wherein the flow passage (10a, 10b) is divided off from the associated working chambers (5, 6) in the region of the cutouts (25a, 25b) by means of partitions, and the partitions are formed along the cutouts (25a, 25b) by collar-shaped protrusions of the exterior sleeve (3) as collar parts (36a, 36b) which are embedded in elastomer material,
**characterized**
**in that** an elastomer layer (9) is applied radially on the outside of the exterior sleeve (3), and the flow passage (10a, 10b) together with the passage base thereof and the passage side walls, and a transition contour chamber (11) are moulded into subregions in said elastomer layer, the flow passage (10a, 10b) and the transition contour chamber (11) being delimited radially on the outside in a liquid-tight manner by the exterior shell (7), and
**in that** the flow passage consists of two sub-passages (10a, 10b), each of which respectively runs in a transverse plane laterally next to the working chambers (5, 6) in such a manner
that the first sub-passage (10b) is connected to the first working chamber (5) via a first lateral chamber output opening (18b), runs in the circumferential direction past the first working chamber (5) and the second working chamber (6), separated therefrom in each case by partitions, and opens into the transition contour chamber (11),
**in that** the second sub-passage (10a) is correspondingly connected to the second working chamber (6) via a second lateral chamber output opening (19a), runs in the opposite circumferential direction past the second working chamber (6) and the first working chamber (5), separated therefrom in each case by partitions, and likewise opens into the transition contour chamber (11) via which a flow connection is produced in the longitudinal direction of the bush between the first sub-passage (10b) and the second sub-passage (10a),
**in that** the exterior sleeve (3) is designed as a cage part, with in each case one supporting ring part (22a, 22b), the front side of which is peripherally closed, and with two radially opposite sleeve web parts (23a, 23b) axially connecting the supporting ring parts (22a, 22b), the cutouts (25a, 25b) for the working chambers (5, 6) being formed between the sleeve web parts (23a, 23b), and respective elastomer bodies (4; 24a, 24b) being arranged on the sleeve web parts (23a, 23b),
**in that** the axially outer passage side walls of the sub-passages (10a, 10b) are each formed by a radially inwardly directed, peripheral passage side wall step (32a, 32b) of an associated supporting ring part (22a, 22b) of the exterior sleeve (3),
**in that** the passage bases of the sub-passages (10a, 10b) are in each case formed by a sleeve web subregion (33a, 33b), which is axially adjacent to an associated channel side wall step (32a, 32b), and, between the sleeve web parts (23a, 23b), by an annular shoulder section (34a, 34b) of the exterior sleeve (3), said annular shoulder section being adjacent to the passage side wall step (32a, 32b), and
**in that** the axially inner passage side walls of the sub-passages (10a, 10b) are formed in the region of a sleeve web part (23a, 23b) by an elastomer body edge region (35) and between the sleeve web parts (23a, 23b), as partitions in relation to the respectively adjacent working chamber (5, 6), by a stable collar part, which protrudes to the outside radially on the associated annular shoulder section (34a, 34b), as a collar ring section (36a, 36b) of the exterior sleeve (3).

2. Elastic bearing bush according to Claim 1, **characterized in that** the supporting ring parts (22a, 22b) are covered radially on the outside and in the region of the passage side wall steps (32a, 32b), and the annular shoulder sections (34a, 34b) and the collar ring sections (36a, 36b) are covered by elastomer material and/or are embedded therein.

3. Elastic bearing bush according to Claim 1 or 2, **characterized in that** the exterior sleeve (3) is a single-part cage sleeve part of uniform material in the form of a machined sheet-metal sleeve part or in the form of a cast part cast from plastic or metal material.

4. Elastic bearing bush according to one of Claims 1 to 3, **characterized in that** the transition contour chamber (11) has a larger cross section than the sub-passages (10a, 10b) and constitutes an expansion in relation thereto, and
**in that** the transition contour chamber (11) has a flow-guiding contour (20; 21) between the opening sub-passages (10a, 10b)..

5. Elastic bearing bush according to Claim 4, **characterized in that** the upper boundary (20) of the flow-guiding contour in the transition contour chamber (11) has a flow-optimized curve profile between the mouth (19b) of the first sub-passage (10b) and the mouth (19a) of the second sub-passage (10a).

6. Elastic bearing bush according to one of Claims 1 to 5, **characterized in that** the sleeve web parts (23a, 23b) are each provided with at least one window (26a, 26b) to which at least one pressure element (27a, 27b) is assigned, the pressure element being arranged in the window region and protruding prior to the installation of the exterior shell (7) such that, when the exterior shell (7) is attached, the at least one pressure element (27a, 27b) is shifted radially inwards with a prestress being applied in the elastomer body (4; 24a, 24b) without impermissibly deforming the supporting ring parts (22a, 22b) and/or sleeve web parts (23a, 23b) in the process.

7. Elastic bearing bush according to one of Claims 1 to 6, **characterized in that** the bearing bush (1) is fitted by being pressed into a receiving eye in the second component to be mounted, with the bush axis approximately horizontal and with the working chambers (5, 6) located vertically one above the other.

8. Elastic bearing bush according to one of Claims 1 to 7, **characterized in that** stops (14) which are covered with elastomer material (13) and project radially into the working chambers (5, 6) are integrally formed on the inner part (2),
**in that** the inner part (2) is designed such that it tapers conically downwards in cross section, and
**in that** the inner part (2) is produced from plastic with a central bore (15) for receiving a pivot spindle.

## Revendications

1. Coussinet élastique avec amortissement hydraulique
avec une partie intérieure (2) pour la liaison avec un premier composant à loger et un tube extérieur (3),
avec un corps en élastomère (4) entre la partie intérieure (2) et le tube extérieur (3),
avec deux chambres de travail (5, 6) remplies de liquide hydraulique, radialement opposées qui sont formées par des évidements associés (25a, 25b) dans le tube extérieur (3) et dans le corps en élastomère (4) ainsi que par une douille extérieure (7) fermant de manière étanche au liquide, et
avec un canal d'écoulement (10a, 10b, 11) pour la liaison d'écoulement entre les deux chambres de travail (5, 6),
le canal d'écoulement (10a, 10b) dans la zone des évidements (25a, 25b) étant divisé par des parois de séparation des chambres de travail associées (5, 6) et les parois de séparation étant formées le long des évidements (25a, 25b) par des passages en forme de collet du tube extérieur (3) comme des parties de collet (36a, 36b) insérées dans le matériau élastomère,
**caractérisé en ce**
**que** sur le tube extérieur (3) est appliquée radialement à l'extérieur une couche d'élastomère (9), dans laquelle dans des zones partielles, du canal d'écoulement (10a, 10b) avec son fond de canal et les parois latérales de canal ainsi qu'une chambre de contour de transition (11) sont moulés, le canal d'écoulement (10a, 10b) et la chambre de contour de transition (11) étant délimités de manière étanche au liquide radialement à l'extérieur par la douille extérieure (7), et
en ce que le canal d'écoulement se compose de deux canaux partiels (10a, 10b), dont respectivement un canal partiel (10a, 10b) s'étend latéralement à côté des chambres de travail (5, 6) dans un plan transversal de telle manière que
le premier canal partiel (10b) soit relié à la première chambre de travail (5) par une première ouverture de sortie (18b) de chambre latérale, passe à côté de la première chambre de travail (5) et de la seconde chambre de travail (6) en étant respectivement séparé par des parois de séparation dans le sens périphérique et débouche dans la chambre de contour de transition (11),
en ce que le second canal partiel (10a) est relié de manière correspondante à la seconde chambre de travail (6) par une seconde ouverture de sortie (19a) de chambre latérale, passe à côté de la seconde chambre de travail (6) et de la première chambre de travail (5) en étant respectivement séparé par des parois de séparation dans le sens périphérique opposé et débouche également dans la chambre de contour de transition (11), par laquelle dans le sens longitudinal du coussinet, une liaison d'écoulement entre le premier canal partiel (10b) et le second canal partiel (10a) est établie,
en ce que le tube extérieur (3) est réalisé comme une partie de cage avec respectivement une partie d'anneau d'appui (22a, 22b) fermée côté avant de manière rotative et avec deux parties de traverse de tube (23a, 23b) reliant axialement les parties d'anneau d'appui (22a, 22b), radialement opposées, entre les parties de traverse de tube (23a, 23b) sont formés les évidements (25a, 25b) pour les chambres de travail (5, 6) et sur les parties de traverse de tube (23a, 23b) sont disposés respectivement des corps en élastomères (4 ; 24a, 24b),
en ce que les parois latérales de canal axialement extérieures des canaux partiels (10a, 10b) sont formées respectivement par un gradin de paroi latérale de canal (32a, 32b) rotatif, dirigé radialement vers l'intérieur d'une partie d'anneau d'appui (22a, 22b) associée du tube extérieur (3),
en ce que les fonds des canaux partiels (10a, 10b) sont formés respectivement d'une part par une zone de partie de traverse de tube (33a, 33b) axialement contigüe à un gradin de paroi latéral de canal associé (32a, 32b) et d'autre part entre les parties de traverse de tube (23a, 23b) par une section de collet annulaire (34a, 34b) contiguë au gradin de paroi latérale de canal (32a, 32b) du tube extérieur (3), et
en ce que les parois latérales de canal axialement intérieures des canaux partiels (10a, 10b) d'une part dans la zone d'une partie de traverse de tube (23a, 23b) sont formées par une zone de bord de corps en élastomère (35) et d'autre part entre les parties de traverse de tube (23a, 23b) comme des parois de séparation avec la chambre de travail (5, 6) respectivement contigüe par une partie de collet stable passée radialement vers l'extérieur sur la section de collet annulaire (34a, 34b) associée comme une section annulaire de collet (36a, 36b) du tube extérieur (3).

2. Coussinet élastique selon la revendication 1, **caractérisé en ce que** les parties d'anneau d'appui (22a, 22b) sont revêtues de matériau élastomère et/ou insérées dedans radialement vers l'extérieur et dans la zone des gradins de paroi latérale de canal (32a, 32b) ainsi que les sections de collet annulaire (34a, 34b) et des sections annulaires de collet (36a, 36b).

3. Coussinet élastique selon la revendication 1 ou 2, **caractérisé en ce que** le tube extérieur (3) est une partie de tube de cage d'un seul tenant et en un seul matériau comme une partie de tube en tôle usinée ou comme une partie coulée en plastique ou matériau métallique.

4. Coussinet élastique selon l'une quelconque des revendications 1 à 3, **caractérisé en ce que** la chambre de contour de transition (11) présente une section transversale plus grande que les canaux partiels (10a, 10b) et constitue un élargissement par rapport à ceux-ci et
**en ce que** la chambre de contour de transition (11) présente un contour de guidage d'écoulement (20 ; 21) entre les canaux partiels débouchants (10a, 10b).

5. Coussinet élastique selon la revendication 4, **caractérisé en ce que** la limitation supérieure (20) du contour de guidage d'écoulement dans la chambre de contour de transition (11) présente une allure de courbe à l'écoulement optimisé entre l'embouchure (19b) du premier canal partiel (10b) et l'embouchure (19a) du second canal partiel (10a).

6. Coussinet élastique selon l'une quelconque des revendications 1 à 5, **caractérisé en ce que** dans les parties de traverse de tube (23a, 23b) est montée respectivement au moins une fenêtre (26a, 26b), à laquelle est associé au moins un élément de compression (27a, 27b) qui est disposé dans la zone de fenêtre et dépasse du montage de la douille extérieure (7) de sorte que lors de l'enfichage de la douille extérieure (7), au moins un élément de compression (27a, 27b) soit déplacé radialement vers l'intérieur en appliquant une précontrainte dans le corps en élastomère (4 ; 24a, 24b) sans déformer de manière non autorisée les parties d'anneau d'appui (22a, 22b) et/ou les parties de traverse de tube (23a, 23b).

7. Coussinet élastique selon l'une quelconque des revendications 1 à 6, **caractérisé en ce que** l'installation du coussinet (1) est effectuée par enfoncement dans un orifice de réception du second composant à loger avec un axe de coussinet à peu près horizontal et des chambres de travail (5, 6) se trouvant verticalement l'une au-dessus de l'autre.

8. Coussinet élastique selon l'une quelconque des revendications 1 à 7, **caractérisé en ce que** sur la partie intérieure (2) sont formées des butées (14) revêtues de matériau élastomère (13) qui pénètrent radialement dans les chambres de travail (5, 6),
**en ce que** la section transversale de la partie intérieure (2) est réalisée rétrécie coniquement vers le bas et
**en ce que** la partie intérieure (2) est fabriquée en plastique avec un perçage central (15) pour la réception d'un axe de pivotement.
